# EUROPEAN PATENT APPLICATION

(11) **EP 4 155 843 A1**
(43) Date of publication of application: **29.03.2023**
(21) Application number: 20938298.5
(22) Date of filing: 26.05.2020
(51) Int. Cl.: G05B 15/02

(54) **INTELLIGENT ELECTRICAL APPLIANCE AND CONTROL METHOD**

(71) Applicant: Huawei Technologies Co., Ltd., Longgang District, Shenzhen, Guangdong 518129 (CN)
(72) Inventor: TAN, Lijuan, Shenzhen, Guangdong 518129 (CN); XIONG, Wei, Shenzhen, Guangdong 518129 (CN); LUO, Kun, Shenzhen, Guangdong 518129 (CN)
(74) Representative: Gill Jennings & Every LLP
(86) International application number: PCT/CN2020/092417
(87) International publication number: WO 2021/237480

(57) **Abstract**

Embodiments of this application disclose an intelligent electric appliance and a control method. The intelligent electric appliance includes: a first controller, where the first controller is configured to: receive a first instruction of a user, and convert the first instruction into a second instruction; and a second controller, where the second controller is connected to the first controller by using a communication interface. The first controller is further configured to send the second instruction to the second controller by using the communication interface, where the second controller is configured to control, based on the second instruction, the intelligent electric appliance to run. The first controller is configured to be independently upgraded when the intelligent electric appliance is connected to a network. In this way, an electric appliance microcontroller is decoupled from an intelligent controller, and the first controller may be independently upgraded and evolved or replaced, thereby accelerating time of putting the intelligent electric appliance on the market. In addition, the first controller may be independently upgraded, so that traffic can be reduced, and an upgrade speed can be improved, to improve user experience of the intelligent electric appliance.

## Description

### TECHNICAL FIELD

Embodiments of this application relate to the field of electric appliance devices, and in particular, to an intelligent electric appliance and a control method.

### BACKGROUND

Currently, a conventional electric appliance is evolving to an intelligent electric appliance. In the conventional electric appliance, an electric appliance microcontroller generally performs control. For example, the electric appliance microcontroller of the conventional electric appliance needs to be responsible for controlling a sensor, display and control data of a display screen of the electric appliance, and the like. A size of the display screen of the conventional electric appliance is generally very small, and the display screen is used to display basic information such as a motor state and an input prompt.

Compared with the conventional electric appliance, changes of the intelligent electric appliance include: providing a network connection function for the electric appliance, adding an intelligent processor, expanding an application of the electric appliance, adding a far-field voice control function, adding a large-size liquid crystal display function, or the like.

A controller of the intelligent electric appliance is a core control part of the intelligent electric appliance. In addition to implementing related control of the microcontroller of the conventional electric appliance, the controller further needs to control various new intelligent functions.

However, currently, the intelligent controller of the intelligent electric appliance is still changing and developing, and needs to be upgraded and updated. However, the conventional electric appliance microcontroller has become stable after years of upgrade. In an existing intelligent electric appliance, the controller of the conventional electric appliance and the controller of the new intelligent function are integrated together, and the controller of the new intelligent function cannot be independently upgraded or replaced. This affects an update speed of the intelligent electric appliance.

### SUMMARY

Embodiments of this application provide an intelligent electric appliance and a control method, to reduce an update difficulty of the intelligent electric appliance and improve an update speed of the intelligent electric appliance.

To achieve the foregoing objective, the following technical solutions are used in embodiments of this application.

According to a first aspect of embodiments of this application, an intelligent electric appliance is provided, including: a first controller, configured to: parse a user instruction received by an input module, to obtain a first instruction corresponding to the user instruction, and convert the first instruction into a second instruction, where the second instruction is an instruction that can be recognized by a second controller, the first controller is configured to control an intelligent control part of the intelligent electric appliance, the intelligent control part includes control on at least one of an audio function, a video function, or a communication function, the second controller is configured to implement conventional control on the intelligent electric appliance, the conventional control includes control on a motor, and the second controller is detachably connected to the first controller by using a communication interface, where the first controller is further configured to send the second instruction to the second controller by using the communication interface; and the second controller is configured to control, based on the second instruction, the intelligent electric appliance to run.

The communication interface includes a first communication interface disposed in the first controller and a second communication interface disposed in the second controller, and the first communication interface is detachably connected to the second communication interface.

In the intelligent electric appliance provided in this embodiment of this application, the first controller is, for example, an intelligent controller, the second controller is, for example, a conventional electric appliance microcontroller, and the first controller is connected to the second controller by using the communication interface. Therefore, the electric appliance microcontroller is decoupled from the intelligent controller, and the first controller may be independently upgraded and evolved or replaced, so that the first controller can inherit and follow intelligent solutions in some existing fields. In addition, evolution of an intelligent technology may also be synchronously tracked. Therefore, time of putting the intelligent electric appliance on the market can be accelerated, to introduce more intelligent household appliance products to the market, and meet a living and working requirement of a user. In addition, compared with a conventional-technology setting manner in which an intelligent controller and a conventional electric appliance microcontroller system of an intelligent electric appliance are integrated together, in this application, the first controller is decoupled from the second controller, so that only hardware of the first controller and only software of the first controller can be upgraded. Before the hardware of the first controller is upgraded, the hardware of the first controller may be first separated from the intelligent electric appliance, and then the hardware is replaced or new hardware is added. In this process, a board and a component of the second controller do not need to be modified. In addition, when software of the intelligent electric appliance is upgraded, only an upgrade package of the first controller may be downloaded, so that traffic can be reduced, and an upgrade speed can be improved, to improve user experience of the intelligent electric appliance.

In an optional implementation, the first controller is further configured to send the first instruction to the second controller by using the communication interface, and the second controller is further configured to control, based on the first instruction, the intelligent electric appliance to run.

In this case, the first instruction obtained by the first controller through parsing may be recognized by the second controller, and the first controller may directly send the first instruction to the second controller without instruction conversion.

In an optional implementation, the first controller is further configured to: parse the user instruction received by the input module, to obtain a third instruction corresponding to the user instruction, and send the third instruction to the second controller by using the communication interface; and the second controller is further configured to control, based on the third instruction, the intelligent electric appliance to run.

In this case, the third instruction obtained by the first controller through parsing may be recognized by the second controller, and the first controller may directly send the third instruction to the second controller without instruction conversion.

In an optional implementation, the intelligent electric appliance further includes the input module, the input module is connected to the first controller, and the input module is configured to receive the user instruction.

Therefore, the input module is connected to the first controller, so that the input module is decoupled from the second controller, and hardware of the input module can be independently upgraded or replaced.

In an optional implementation, the input module includes a microphone, the user instruction is a voice instruction of a user, and the first controller is specifically configured to parse the voice instruction that is of the user and that is received by the microphone, to obtain the first instruction corresponding to the voice instruction.

In this way, the intelligent electric appliance may perform a corresponding action in response to voice of the user, to implement voice interaction between the intelligent electric appliance and the user, reduce an operation difficulty, and facilitate user control.

In an optional implementation, the input module includes a touchscreen, the user instruction is a touch instruction of a user, and the first controller is specifically configured to parse the touch instruction that is of the user and that is received by the touchscreen, to obtain the first instruction.

In this way, the intelligent electric appliance may perform a corresponding action in response to a touch operation of the user, to implement intelligent interaction between the intelligent electric appliance and the user, reduce an operation difficulty, and facilitate user control.

In an optional implementation, the intelligent electric appliance further includes the motor and an output module, the output module is connected to the first controller, and the motor is connected to the second controller; the second controller is further configured to: obtain a running state of the motor, and send the running state of the motor to the first controller; and the first controller is configured to feed back the running state of the motor to the user by using the output module; or the first controller is configured to adjust control on the intelligent control part based on the running state of the motor.

In this way, the first controller may present a running state of the intelligent electric appliance to the user in real time by using the output module, and may further adjust control on the intelligent control part based on the running state of the motor. Therefore, when the motor runs abnormally, a response may be made in a timely manner.

In an optional implementation, the output module includes a loudspeaker, and the first controller is specifically configured to feed back the running state of the motor to the user through voice broadcast by using the loudspeaker.

In this way, the user can more conveniently obtain the running state of the intelligent electric appliance in a timelier manner.

In an optional implementation, the output module further includes a display screen, and the first controller is specifically configured to feed back the running state of the intelligent electric appliance to the user through display by using the display screen.

In this way, the user can more conveniently obtain the running state of the intelligent electric appliance in a timelier manner.

In an optional implementation, the first controller includes one or more sub-controllers, and the one or more sub-controllers are configured to be independently upgraded when the intelligent electric appliance is connected to a network.

In this way, during upgrade, only an upgrade package of the sub-controller needs to be downloaded, and only the sub-controller is upgraded. Therefore, traffic can be further reduced, and an upgrade speed can be further improved, to improve user experience of the intelligent electric appliance.

In an optional implementation, the communication interface is a serial peripheral interface SPI, an inter integrated circuit bus I2C, or a universal asynchronous receiver/transmitter UART. Therefore, there are a plurality of types of communication interfaces, and a proper communication interface may be selected based on a type of information transmitted between the first controller and the second controller, to enrich user experience.

According to a second aspect of embodiments of this application, a control method for an intelligent electric appliance is provided, where the method includes: A first controller parses a user instruction received by an input module, to obtain a first instruction corresponding to the user instruction, and converts the first instruction into a second instruction, where the second instruction is an instruction that can be recognized by a second controller, the first controller is configured to control an intelligent control part of the intelligent electric appliance, the intelligent control part includes control on at least one of an audio function, a video function, or a communication function, the second controller is configured to implement conventional control on the intelligent electric appliance, the conventional control includes control on a motor, and the first controller is detachably connected to the second controller by using a communication interface; the first controller sends the second instruction to the second controller by using the communication interface; and the second controller controls, based on the second instruction, the intelligent electric appliance to run.

In an optional implementation, the method further includes: The first controller sends the first instruction to the second controller by using the communication interface, and the second controller controls, based on the first instruction, the intelligent electric appliance to run.

In an optional implementation, before the first controller parses the user instruction received by the input module, the method further includes: The first controller receives the user instruction by using the input module, where the input module is connected to the first controller.

In an optional implementation, the input module includes a microphone, and that a first controller parses a user instruction received by an input module includes: The first controller parses a voice instruction that is of a user and that is received by the microphone, to obtain the first instruction corresponding to the voice instruction.

In an optional implementation, the input module includes a touchscreen, and that a first controller parses a user instruction received by an input module includes: The first controller parses a touch instruction that is of a user and that is received by the touchscreen, to obtain the first instruction.

In an optional implementation, the method further includes: The second controller obtains a running state of the motor, and sends the running state of the motor to the first controller, where the motor is connected to the second controller; and the first controller feeds back the running state of the motor to the user by using an output module, where the output module is connected to the first controller; or the first controller adjusts control on the intelligent control part based on the running state of the motor.

In an optional implementation, the output module includes a loudspeaker, and that the first controller feeds back the running state of the motor to the user by using an output module includes: The first controller feeds back the running state of the motor to the user through voice broadcast by using the loudspeaker

In an optional implementation, the output module includes a display screen, and that the first controller feeds back the running state of the motor to the user by using an output module includes: The first controller feeds back the running state of the motor to the user by using the display screen.

In an optional implementation, the first controller includes one or more sub-controllers connected to the input module, and the one or more sub-controllers are separately detachably connected to the second controller by using the communication interface.

In an optional implementation, the communication interface includes an SPI, an I2C, or a UART.

A third aspect of embodiments of this application provides a computer readable medium, where the computer readable medium stores a computer program or instruction, and when the computer program or instruction is executed, a computer is enabled to perform the foregoing method.

A fourth aspect of embodiments of this application provides a computer program product, where the computer program product includes computer program code, and when the computer program code runs on a computer, the computer is enabled to perform the foregoing method.

### BRIEF DESCRIPTION OF DRAWINGS

FIG. 1 is a schematic diagram of a structure of an intelligent electric appliance;
FIG. 2 is a schematic diagram of a structure of an intelligent electric appliance according to an embodiment of this application;
FIG. 3 is a flowchart of a control method for an intelligent electric appliance according to an embodiment of this application;
FIG. 4 is a schematic diagram of composition of an intelligent electric appliance according to an embodiment of this application;
FIG. 4a is a schematic diagram of an interface of an intelligent electric appliance according to an embodiment of this application;
FIG. 5 is a schematic diagram of composition of another intelligent electric appliance according to an embodiment of this application;
FIG. 5a is a schematic diagram of an interface of another intelligent electric appliance according to an embodiment of this application;
FIG. 6 is a schematic diagram of composition of another intelligent electric appliance according to an embodiment of this application;
FIG. 6a is a schematic diagram of an interface of another intelligent electric appliance according to an embodiment of this application;
FIG. 7 is a schematic diagram of composition of another intelligent electric appliance according to an embodiment of this application;
FIG. 7a is a schematic diagram of an interface of another intelligent electric appliance according to an embodiment of this application;
FIG. 8 is a flowchart of another control method for an intelligent electric appliance according to an embodiment of this application;
FIG. 9 is a flowchart of another control method for an intelligent electric appliance according to an embodiment of this application;
FIG. 10 is a flowchart of an upgrade method for an intelligent electric appliance according to an embodiment of this application;
FIG. 11 is a schematic diagram of a structure of a first controller according to an embodiment of this application;
FIG. 12 is a schematic diagram of a structure of another first controller according to an embodiment of this application; and
FIG. 13 is a flowchart of another upgrade method for an intelligent electric appliance according to an embodiment of this application.

### DESCRIPTION OF EMBODIMENTS

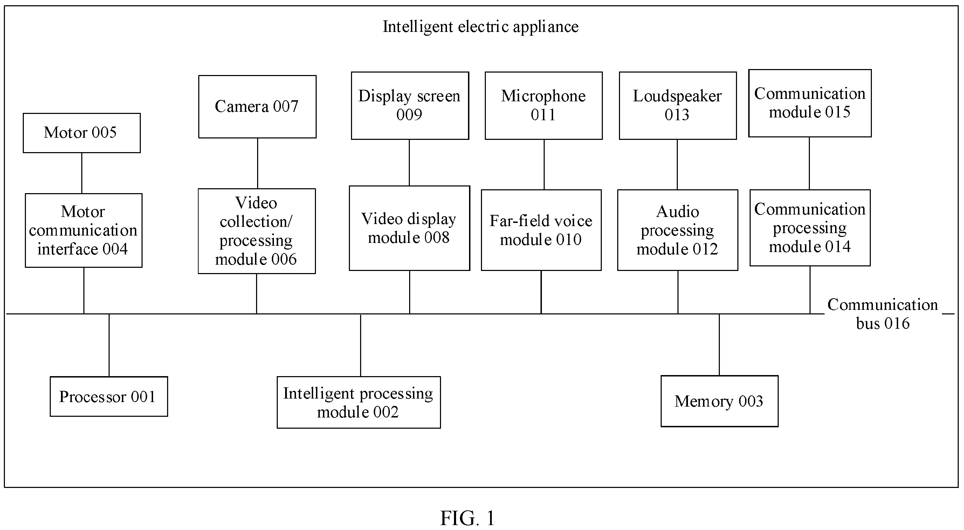

FIG. 1 is a schematic diagram of a structure of a controller of an intelligent electric appliance. The intelligent electric appliance may be a robot, a refrigerator, a washer, and the like. As shown in FIG. 1, the controller of the intelligent electric appliance includes a processor 001, an intelligent processing module 002, a memory 003, a motor communication interface 004, a video collection/processing module 006, a video display module 008, a far-field voice module 010, an audio processing module 012, and a communication processing module 014.

The intelligent electric appliance further includes a motor 005, a camera 007, a communication module 015, a display screen 009, a microphone 011, and a loudspeaker 013.

The processor 001, the intelligent processing module 002, the memory 003, the motor communication interface 004, the video collection/processing module 006, the video display module 008, the far-field voice module 010, the audio processing module 012, and the communication processing module 014 are connected to each other by using a communication bus 016.

For example, the communication module 015 is connected to the communication bus 016 by using the communication processing module 014, the display screen 009 is connected to the communication bus 016 by using the video display module 008, the camera 007 is connected to the communication bus 016 by using the video collection/processing module 006, the microphone 011 is connected to the communication bus 016 by using the far-field voice module 010, the loudspeaker 013 is connected to the communication bus 016 by using the audio processing module 012, and the motor 005 is connected to the communication bus 016 by using the motor communication interface 004.

The processor 001 is a control center of the controller, and may be one processor, or may include a plurality of processors. For example, the processor 001 is one or more central processing units (Central Processing Unit, CPU), or an application-specific integrated circuit (Application Specific Integrated Circuit, ASIC), or may be configured as one or more integrated circuits that can implement this embodiment of this application, one or more microprocessors (Digital Signal Processor, DSP), or one or more field programmable gate arrays (Field Programmable Gate Array, FPGA).

The processor 001 may perform various functions of the controller by running or executing a software program stored in the memory 003 and invoking data stored in the memory 003.

In a specific implementation, each of these processors may be a single-core processor (single-CPU), or may be a multi-core processor (multi-CPU). Herein, the processor may be one or more devices, circuits, and/or processing cores configured to process data (for example, computer program instructions).

The intelligent processing module 002 may be a CPU that performs artificial intelligence (AI) computing and deep learning processing, or may be a software module that runs on a network accelerator. The intelligent processing module 002 may be integrated into the processor 001, or may be independently disposed.

The memory 003 may be a read-only memory (Read-Only Memory, ROM) or another type of static storage device capable of storing static information and an instruction, or a random access memory (Random Access Memory, RAM) or another type of dynamic storage device capable of storing information and an instruction, for example, a double data rate (Double Data Rate, DDR) memory or a low-power double data rate (Low Power Double Data Rate, LPDDR) memory, or may be an electrically erasable programmable read-only memory (Electrically Erasable Programmable Read-Only Memory, EEPROM), a compact disc read-only memory (Compact Disc Read-Only Memory, CD-ROM) or another compact disc storage, an optical disc storage (including a compressed optical disc, a laser disc, an optical disc, a digital versatile disc, a Blu-ray optical disc, and the like), a magnetic disk storage medium or another magnetic storage device, or any other medium that can carry or store expected program code in a form of an instruction or a data structure and that can be accessed by a computer. However, no limitation is imposed. The memory 003 may exist independently, and is connected to the processor 001 by using the communication bus 016. Alternatively, the memory 003 may be integrated into the processor 001.

The memory 003 may be configured to store computer-executable program code. The executable program code includes instructions. The processor 001 performs various function applications and data processing of the intelligent electric appliance by running the instruction stored in the memory 003. The memory 003 may include a program storage area and a data storage area. The program storage area may store an operating system, an application required by at least one function (for example, a sound playing function or an image playing function), and the like.

The data storage region may store data (for example, audio data and an address book) and the like created in a process of using the intelligent electric appliance. In addition, the memory 003 may include a high-speed random access memory, and may further include a non-volatile memory, for example, at least one magnetic disk storage, a flash memory device, or a universal flash storage (universal flash storage, UFS).

The motor communication interface 004 is configured to communicate with another device or a communication network, for example, the Ethernet, a radio access network (Radio Access Network, RAN), or a wireless local area network (Wireless Local Area Networks, WLAN). The motor communication interface 004 may include a receiving unit for implementing a receiving function and a sending unit for implementing a sending function.

The communication bus 016 may be an industry standard architecture (Industry Standard Architecture, ISA) bus, a peripheral component interconnect (Peripheral Component Interconnect, PCI) bus, an extended industry standard architecture (Extended Industry Standard Architecture, EISA) bus, or the like, or may be an advanced extensible interface (Advanced extensible Interface, AXI) or an advanced high-performance bus (Advanced High Performance Bus, AHB). The bus may be classified into an address bus, a data bus, a control bus, and the like. For ease of representation, only one bold line is used for representation in FIG. 1, but this does not mean that there is only one bus or only one type of bus.

The camera 007 is configured to capture a video or a still image. An optical image of an object is generated through a lens, and is projected onto a photosensitive element. The photosensitive element may be a charge coupled device (charge coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to an ISP for converting the electrical signal into a digital image signal. The ISP outputs the digital image signal to the DSP for processing. The DSP converts the digital image signal into an image signal in a standard format, for example, RGB or YUV. In some embodiments, the intelligent electric appliance may include one or N cameras 007, and N is a positive integer greater than 1.

The video collection/processing module 006 is configured to process data collected by the camera 007. For example, the video collection/processing module 006 includes a video codec, configured to compress or decompress a digital video. The intelligent electric appliance may support one or more video codecs. In this way, the intelligent electric appliance may play or record a video in a plurality of encoding formats. For example, during photographing, a shutter is opened, light is transmitted to a photosensitive element of the camera 007 by using a lens, and the photosensitive element converts an optical signal into an electrical signal, and transmits the electrical signal to the video collection/processing module 006 for processing, to convert the electrical signal into an image that can be used for display. The video collection/processing module 006 may further perform algorithm optimization on noise, luminance, and complexion of the image. The video collection/processing module 006 may further optimize a parameter such as exposure and a color temperature of a photographing scene. In some embodiments, the video capture/processing module 006 may be disposed in the camera 007.

During working, the camera 007 may be configured to: collect a gesture, a motion, and the like of a user, and feed back the gesture, the motion, and the like to the video collection/processing module 006. The video collection/processing module 006 is configured to parse the instruction. The processor 001 and the intelligent processing module 002 obtain a parsing result by using the communication bus 016, and control, based on the parsing result, the motor 005 to run.

The intelligent electric appliance implements a display function by using the video display module 008, the display screen 009, and the like. The video display module 008 may be a microprocessor that has an image processing function, and the video display module 008 is connected to the display screen 009 and the processor. For example, the video display module 008 is further configured to perform mathematical and geometric calculation, to implement graphics rendering.

The display screen 009 is configured to display an image, a video, or the like. The display screen 009 includes a display panel. The display panel may be a liquid crystal display (liquid crystal display, LCD) 009, an organic light-emitting diode (organic light-emitting diode, OLED), an active-matrix organic light emitting diode (active-matrix organic light emitting diode, AMOLED), a flexible light emitting diode (flex light-emitting diode, FLED), a mini-LED, a micro-LED, a micro-OLED, a quantum dot light emitting diode (quantum dot light emitting diode, QLED), or the like. In some embodiments, the intelligent electric appliance may include one or N display screens 009, and N is a positive integer greater than 1.

The intelligent device may implement an audio function by using the audio processing module 012, the loudspeaker 013, the microphone 011, and the like.

The audio processing module 012 may be configured to convert digital audio information into an analog audio signal, and may be further configured to encode and decode an audio signal.

The loudspeaker 013 is configured to play the analog audio signal.

The microphone 011 is configured to collect a sound signal.

The far-field voice module 010 is configured to recognize the sound signal collected by the microphone 011. When the intelligent electric appliance is controlled through voice, the user produces sound near the microphone 011, and the microphone 011 collects a sound signal of the user. At least one microphone 011 may be disposed in the intelligent electric appliance. In some other embodiments, two microphones 011 may be disposed in the intelligent electric appliance, to implement a noise reduction function in addition to collecting a sound signal. In some other embodiments, three, four, or more microphones 011 may be alternatively disposed in the intelligent electric appliance, to recognize a sound source, implement a directional recording function, and the like in addition to implementing a function such as sound signal collection, speech recognition, voiceprint recognition, human-computer interaction through voice, and noise reduction.

It should be noted that the far-field voice module 010 may run only in the controller, or may provide voice processing in combination with a cloud.

A wireless communication function of the intelligent electric appliance may be implemented by using the communication module 015 and the communication processing module 014. For example, the communication module 015 includes an antenna, a mobile communication module, and a wireless communication module. For example, the communication processing module 014 includes a modem processor, a baseband processor, and the like.

The antenna may be configured to transmit and receive an electromagnetic wave signal. Each antenna in the intelligent electric appliance may be configured to cover one or more communication frequency bands.

The mobile communication module may provide a solution to wireless communication applied to the intelligent electric appliance, for example, a second generation telephone technology specification (2-Generation wireless telephone technology, 2G), a third generation mobile communication technology (3rd-Generation, 3G), a fourth generation mobile communication technology (4th generation mobile communication technology, 4G), and a fifth generation mobile communication technology (5th generation wireless systems, 5G). The mobile communication module may include at least one filter, a switch, a power amplifier, a low noise amplifier (low noise amplifier, LNA), and the like. The mobile communication module may receive an electromagnetic wave through the antenna, perform processing such as filtering or amplification on the received electromagnetic wave, and transmit the electromagnetic wave to a modem processor for demodulation. The mobile communication module may further amplify a signal modulated by the modem processor, and convert the amplified signal into an electromagnetic wave for radiation by using the antenna. In some embodiments, at least some functional modules of the mobile communication module may be disposed in the processor 001. In some embodiments, at least some functional modules of the mobile communication module and at least some modules of the processor 001 may be disposed in a same device.

The modem processor may include a modulator and a demodulator. The modulator is configured to modulate a to-be-sent low-frequency baseband signal into a medium-frequency or high-frequency signal. The demodulator is configured to demodulate a received electromagnetic wave signal into a low-frequency baseband signal. Then, the demodulator transmits the low-frequency baseband signal obtained through demodulation to the baseband processor for processing. The baseband processor processes the low-frequency baseband signal, and then transfers an obtained signal to an application processor. The application processor outputs a sound signal by using an audio device (which is not limited to a loudspeaker, a microphone, and the like), or displays an image or a video by using the display screen 009. In some embodiments, the modem processor may be an independent component. In some other embodiments, the modem processor may be independent of the processor 001, and is disposed in a same device as the mobile communication module or another functional module.

The wireless communication module may provide a wireless communication solution that is applied to the intelligent electric appliance, and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module may be integrated with at least one communication processing module 014. The wireless communication module receives an electromagnetic wave through the antenna, performs frequency modulation and filtering processing on an electromagnetic wave signal, and sends a processed signal to the processor 001. The wireless communication module may further receive a to-be-sent signal from the processor 001, perform frequency modulation and amplification on the signal, and convert the signal into an electromagnetic wave for radiation through the antenna.

In some embodiments, one antenna and the mobile communication module of the intelligent electric appliance are coupled, and the other antenna and the wireless communication module are coupled, so that the intelligent electric appliance can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time division-synchronous code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or satellite based augmentation systems (satellite based augmentation systems, SBAS).

During working, the microphone Oil is configured to: receive a voice instruction sent by the user, and send the received instruction to the far-field voice module 010. The far-field voice module 010 is configured to parse the instruction. The processor 001 and the intelligent processing module 002 obtain a parsing result by using the communication bus 016, and control, based on the parsing result, the motor 005 to run.

The processor 001 is further configured to: monitor running of the motor 005, and send a running state of the motor 005 to the video display module 008 or the audio processing module 012 by using the communication bus 016.

The video display module 008 is configured to: convert the running state of the motor 005 into a video, and display the video by using the display screen 009.

The audio processing module 012 is configured to: convert the running state of the motor 005 into audio, and feed back the running state of the motor 005 through voice broadcast by using the loudspeaker 013.

However, an intelligent control part and a conventional control part of the intelligent electric appliance are integrated together, and cannot be separated. Consequently, upgrade or replacement is difficult, and an update speed is affected.

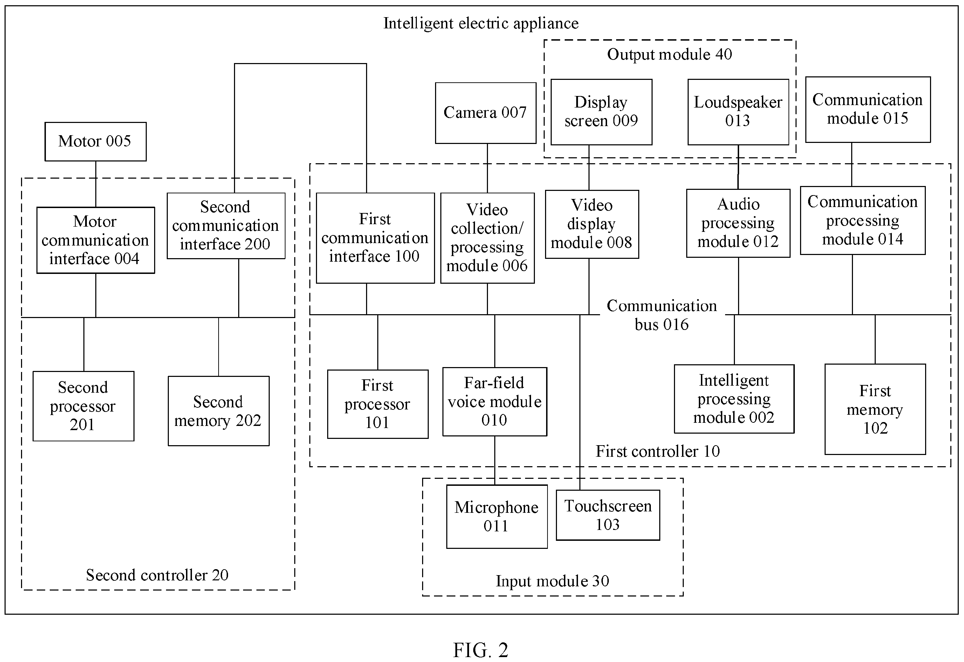

FIG. 2 is a schematic diagram of a structure of an intelligent electric appliance according to an embodiment of this application. As shown in FIG. 2, the intelligent electric appliance includes a first controller 10, a second controller 20, an input module 30, and an output module 40. The first controller 10 and the second controller 20 may be two independent boards, or may be two independent chips or a plurality of chips/components.

The second controller 20 is, for example, an electric appliance microcontroller, and includes a second processor 201, a second memory 202, a second communication interface 200, and a motor communication interface 004.

The first controller 10 is, for example, an intelligent controller, and includes a first communication interface 100, a first processor 101, a first memory 102, an intelligent processing module 002, a video collection/processing module 006, a video display module 008, a far-field voice module 010, an audio processing module 012, and a communication processing module 014.

The intelligent electric appliance further includes, for example, a motor 005, and the motor 005 is connected to the second controller 20.

The input module 30 further includes, for example, a camera 007, a microphone 011, and a touchscreen 103 that are separately connected to the first controller 10.

The output module 40 includes, for example, a loudspeaker 013 and a display screen 009 that are separately connected to the first controller 10.

In addition, the intelligent electric appliance further includes, for example, a communication module 015.

It should be understood that, in a possible case, the touchscreen 103 and the display screen 009 may correspond to a same screen. In this case, the display screen of the intelligent electric appliance has a touchscreen function. A processing module corresponding to the display screen includes the video display module 008 and a touch module (not shown in the figure). When a user touches the display screen or slides on the display screen, the display screen may convert a touch or sliding motion of the user into a touch instruction, and send the touch instruction to the first controller. The touch module may be configured to parse the touch instruction obtained by the display screen through conversion.

The first controller 10 may execute an intelligent control part of the intelligent electric appliance. The intelligent control part includes control on at least one of an audio function, a video function, or a communication function. The first controller 10 may further deliver a control instruction to the second controller, and present a running state of the intelligent electric appliance.

It should be noted that the audio function may include: obtaining a voice instruction of the user by using the microphone 011, and performing voice broadcast by using the loudspeaker 013.

The video function may include: displaying the running state, a control result, or the like of the intelligent electric appliance as a video by using the display screen 009, or obtaining an image of the user by using the camera, to implement related control on the intelligent electric appliance, facial recognition, other video image processing, and the like.

The communication function may include: communicating with a network and another device by using the communication module 015, for example, sending a message to a mobile terminal of the user or receiving a remote control instruction sent by the user.

In addition, the intelligent control of the first controller 10 further includes, for example, another intelligent control function such as control on a touch function and control on an AI function.

The second controller 20 may execute a control part of a conventional home appliance, and the second controller 20 may, for example, control, based on the instruction delivered by the first controller 10, the running state of the intelligent electric appliance, for example, control the motor to start or stop working.

For example, the first controller 10 may be detachably connected to the second controller 20 by using a communication interface. The communication interface includes the first communication interface disposed in the first controller 10 and the second communication interface 200 disposed in the second controller 20. The first controller 10 may communicate with the second controller 20 by using the first communication interface 100 and the second communication interface 200, so that the first controller 10 and the second controller 20 can be independently reused or upgraded, to improve product stability.

It should be noted that the first communication interface 100 and the second communication interface 200 may be interfaces that mutually match, and the first communication interface 100 is detachably connected to the second communication interface 200.

Types of the first communication interface 100 and the second communication interface 200 are not limited in this embodiment of this application. The first communication interface 100 and the second communication interface 200 may include a serial peripheral interface (Serial Peripheral Interface, SPI), an inter integrated circuit bus (inter-integrated circuit, I2C), an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB), and/or the like.

The SPI is a full-duplex and synchronous communication bus that enables an MCU to communicate with various peripheral devices in a serial manner to exchange information. An SPI bus system may directly interface with a plurality of standard peripheral components produced by various manufacturers. Four lines are generally used for the interface: a serial clock line, a master input/slave output data line, a master output/slave input data line, and an active low slave select line.

The I2C is a two-way synchronization serial bus, and includes one serial data line (serial data line, SDA) and one serial clock line (derail clock line, SCL). In some embodiments, the processor 001 may include a plurality of groups of I2C buses. The processor 001 may be separately coupled to a touch sensor, a charger, a flashlight, the camera 007, and the like by using different I2C bus interfaces.

The I2S interface may be used for audio communication. In some embodiments, the processor 001 may include a plurality of groups of I2S buses.

The PCM interface may also be used for audio communication, and analog signal sampling, quantization, and coding. In some embodiments, the audio module may be coupled to the wireless communication module through a PCM bus interface.

The UART is a universal serial data bus, and is used to perform asynchronous communication. The bus performs communication bidirectionally. The bus converts to-be-transmitted data between serial communication and parallel communication.

The MIPI may be configured to connect the processor 001 to a peripheral component such as the display screen 009 or the camera 007.

The GPIO interface may be configured by using software. The GPIO interface may be configured as a transmission control signal, or may be configured as a transmission data signal. In some embodiments, the GPIO interface may be configured to connect the processor 001 to the camera 007, the display screen 009, the wireless communication module, the audio module 012, the sensor module, or the like.

The USB interface 130 is an interface that conforms to a USB standard specification, and may be specifically a mini USB interface, a micro USB interface, a USB type-C interface, or the like. The USB interface may be configured to transmit data between the intelligent electric appliance and the peripheral device.

It may be understood that an interface connection relationship between the modules that is illustrated in this embodiment of the present invention is merely an example for description, and constitutes no limitation on the structure of the intelligent electric appliance. In other embodiments of this application, the first communication interface 100 and the second communication interface 200 may be combined in an interface connection manner that is the same as or different from that in the foregoing embodiment.

The first controller 10 is configured to receive a first instruction of the user by using the input module 30.

The first controller 10 communicates with the second controller 20 sequentially by using the second communication interface 200 and the first communication interface 100. The first controller 10 is further configured to: convert the first instruction into a second instruction, and send the second instruction to the second controller 20 by using the first communication interface 100 and the second communication interface 200. The second controller 20 is configured to control, based on the second instruction, the intelligent electric appliance to run.

For example, as shown in FIG. 2, the input module 30 includes the microphone 011, the microphone is configured to obtain a voice instruction of the user, and the first controller 10 parses the voice instruction of the user to obtain the first instruction corresponding to the voice instruction. For example, the intelligent electric appliance is an air conditioner, and the voice instruction sent by the user is "lower the temperature by 3 degrees". The first controller parses (or performs semantic analysis) the voice instruction, to understand specific control that is on the intelligent electric appliance and that is included in the voice instruction of the user, and obtain the corresponding first instruction. The first instruction is an instruction that can be understood by the first controller, or the first instruction may be equivalent to "lower the temperature by 3 degrees" for the first controller.

In an optional case, the first controller is further configured to convert the first instruction into the second instruction, and the second instruction is an instruction that can be recognized by the second controller. For example, the second instruction is an instruction that can be recognized by the motor of the intelligent electric appliance, for example, the second instruction may be a pulse signal or a pulse width modulation (Pulse Width Modulation, PWM) signal.

In an optional case, the first controller 10 is further configured to send the first instruction to the second controller 20, and the second controller 20 is configured to control, based on the first instruction, the intelligent electric appliance to run.

In this case, the first instruction obtained by the first controller 10 through parsing may be recognized by the second controller 20, and the first controller 10 may directly send the first instruction to the second controller 20 without instruction conversion.

In an optional case, the first controller 10 is further configured to: parse a user instruction received by the input module 30, to obtain a third instruction corresponding to the user instruction, and send the third instruction to the second controller 20 by using the first communication interface 100 and the second communication interface 200; and the second controller 20 is further configured to control, based on the third instruction, the intelligent electric appliance to run.

In this case, the third instruction obtained by the first controller 10 through parsing may be recognized by the second controller 20, and the first controller 10 may directly send the third instruction to the second controller 20 without instruction conversion.

In an optional case, a sound signal collected by the microphone is an analog signal, and the first controller 10 may convert, into a digital signal, the sound signal that is of an analog form and that is collected by the microphone 011.

During working, the intelligent electric appliance may periodically collect sound in an environment. For example, in FIG. 2, the first processor 101 controls the microphone 011 to collect the sound in the environment based on a specified period.

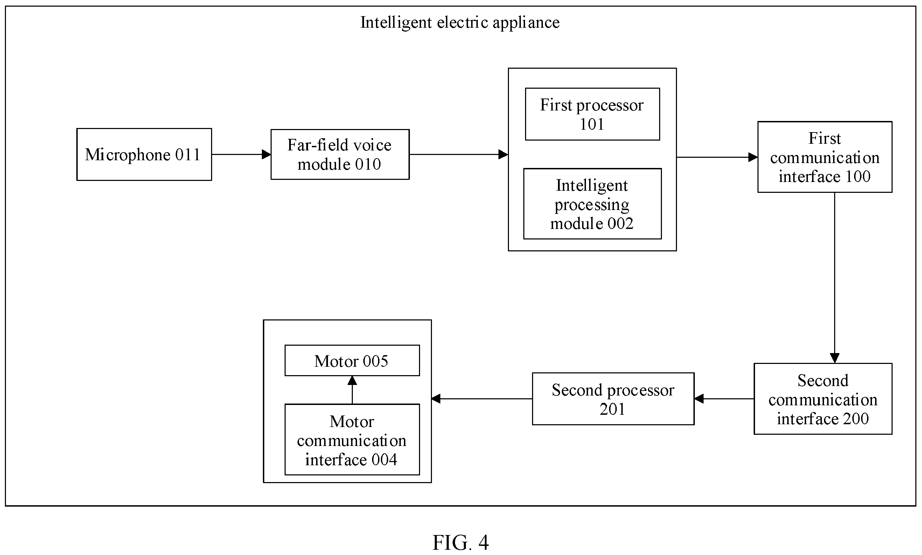

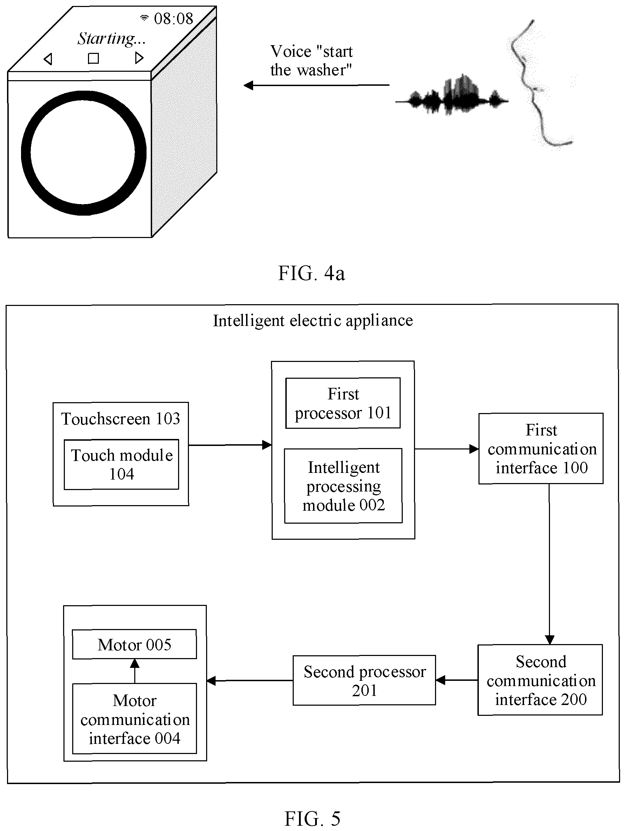

After collecting the sound in the environment each time, the intelligent electric appliance may perform preprocessing to obtain a voice signal. For example, after collecting the sound, the microphone 011 in FIG. 4 transmits the sound signal to the far-field voice module 010, and the far-field voice module 010 preprocesses the obtained sound signal.

In an implementation, the preprocessing is noise reduction processing, and the intelligent electric appliance performs noise reduction processing on the received sound.

The far-field voice module 010 may send the preprocessed sound signal to the first processor 101.

After obtaining the preprocessed sound information, the first processor 101 may further determine whether the sound information includes a control instruction, that is, determines whether the voice of the user includes a control instruction.

In some embodiments, the first processor 101 determines whether first voice includes a control instruction. If determining that the first voice includes a control instruction, the first processor 101 sends the control instruction to the second processor 201 by using the first communication interface 100 and the second communication interface 200. The second processor 201 may control, based on the control instruction, the motor 005 to perform an action corresponding to the control instruction. If determining that the first voice does not include a control instruction, the first processor 101 performs no action.

In an implementation, a control instruction set is configured in the first memory 102. The instruction set includes one or more control instructions. After receiving the sound information, the first processor 101 performs matching in the control instruction set by using the sound information. If the matching succeeds, the first processor 101 determines a control instruction corresponding to the first voice.

For example, a relationship table between a control instruction and an action is further configured in the first memory 102, and includes a correspondence between each control instruction and one execution action.

For example, as shown in FIG. 4a, the intelligent electric appliance is a washer. When the user indicates "start the washer" through voice, the washer may receive the voice instruction, and start running in response to the voice instruction.

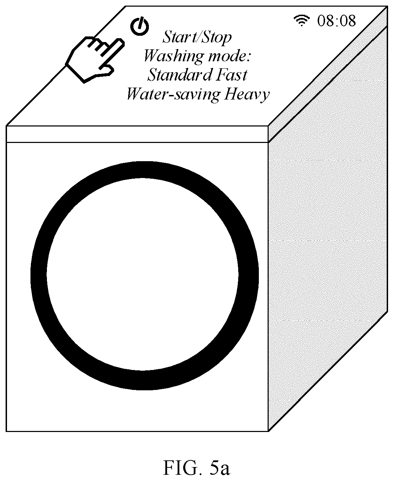

In another implementation of this application, as shown in FIG. 2, the input module 30 further includes, for example, the touchscreen 103. As shown in FIG. 5, the touchscreen 103 includes at least a touch module 104, the touch module 104 may be a touch sensor, and the touch sensor is configured to detect a touch operation performed on or near the touch sensor. The touch sensor may transfer the detected touch operation to the first processor 101 to determine a type of a touch event, so that visual output related to the touch operation can be provided by using the display screen 009. In some other embodiments, the touch sensor may be disposed on a surface of the intelligent electric appliance, and is located at a position different from that of the display screen 009.

The touchscreen 103 receives a touch instruction of the user, and the first controller 10 parses the touch instruction to obtain the first instruction corresponding to the touch instruction. For example, the touch operation of the user is "slide to the right", and the corresponding first instruction is "raise the volume". When the user slides to the right on the touchscreen, the touchscreen 103 receives the touch instruction of the user. The first controller 10 parses the touch instruction to obtain the first instruction corresponding to the touch instruction. The first instruction is an instruction that can be recognized by the first controller.

In an optional case, the first controller 10 may further convert the first instruction into the second instruction, and the second instruction is an instruction that can be recognized by the second controller, or the second instruction is a control instruction that can be recognized by the motor of the intelligent electric appliance.

In an optional case, the first processor 101 may further process the first instruction to determine a type of a touch event, so as to determine whether the touch event includes a control instruction. If determining that the touch event includes a control instruction, the first processor 101 sends the control instruction to the second processor 201 by using the first communication interface 100 and the second communication interface 200. The second processor 201 may control, based on the control instruction, the motor 005 to perform an action corresponding to the control instruction. If determining that the touch event does not include a control instruction, the first processor 101 performs no action.

For example, as shown in FIG. 5a, the intelligent electric appliance is a washer. When the user taps a sign "start/stop" displayed on the touchscreen 103, the washer may start running in response to the tapping operation.

In another implementation of this application, the input module 30 further includes, for example, the camera 007. The first controller 10 collects a gesture, a motion, and the like of the user by using the camera 007, and sends the gesture, the motion, and the like to the video collection/processing module 006. The video collection/processing module 006 preprocesses the obtained video signal such as the gesture and the motion of the user

The first processor 101 may parse an instruction such as a gesture and a motion, and the second processor 201 obtains a parsing result by using the communication bus 016, and controls, based on the parsing result, the motor 005 to run.

In the intelligent electric appliance provided in this embodiment of this application, the first controller is, for example, an intelligent controller, the second controller is, for example, a conventional electric appliance microcontroller, and the first controller is connected to the second controller by using the communication interface. Therefore, the electric appliance microcontroller is decoupled from the intelligent controller, and the first controller may be independently upgraded and evolved or replaced, so that the first controller can inherit and follow intelligent solutions in some existing fields. In addition, evolution of an intelligent technology may also be synchronously tracked. Therefore, time of putting the intelligent electric appliance on the market can be accelerated, to introduce more intelligent household appliance products to the market, and meet a living and working requirement of the user. In addition, compared with a conventional-technology setting manner in which an intelligent controller and a conventional electric appliance microcontroller system of an intelligent electric appliance are integrated together, in this application, the first controller is decoupled from the second controller, so that only hardware of the first controller and only software of the first controller can be upgraded. Before the hardware of the first controller is upgraded, the hardware of the first controller may be first separated from the intelligent electric appliance, and then the hardware is replaced or new hardware is added. In this process, a board and a component of the second controller do not need to be modified. In addition, when software of the intelligent electric appliance is upgraded, only an upgrade package of the first controller may be downloaded, so that traffic can be reduced, and an upgrade speed can be improved, to improve user experience of the intelligent electric appliance.

In an optional case, the first controller 10 may further directly send the first instruction to the second controller 20, and the second controller 20 is configured to control, based on the first instruction, the intelligent electric appliance to run. In this way, the first controller may further send, to the second controller, the first instruction that is not converted. The second controller may control, based on the first instruction, the intelligent electric appliance to run, so that the intelligent electric appliance also has a control function of a conventional electric appliance, to enrich user experience.

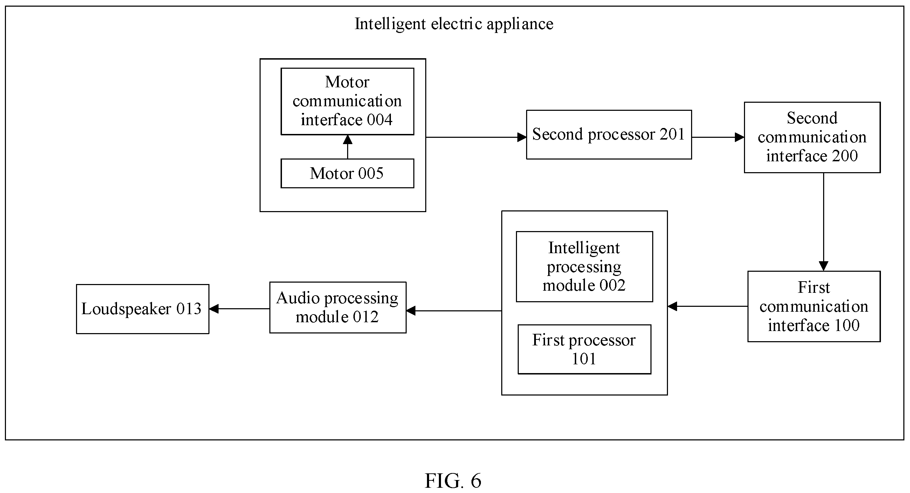

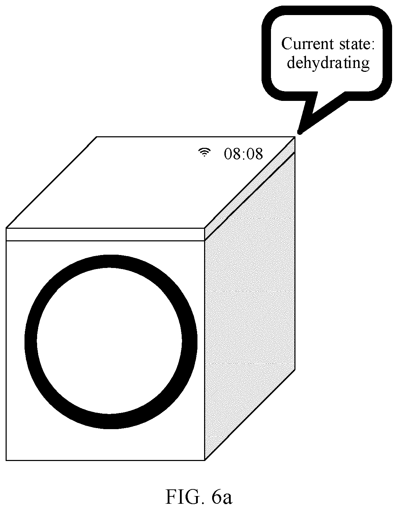

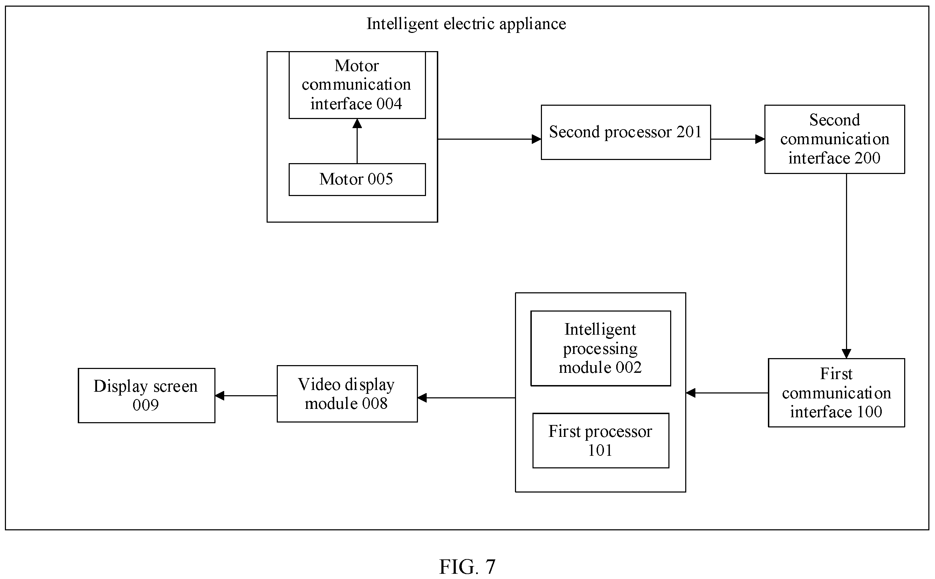

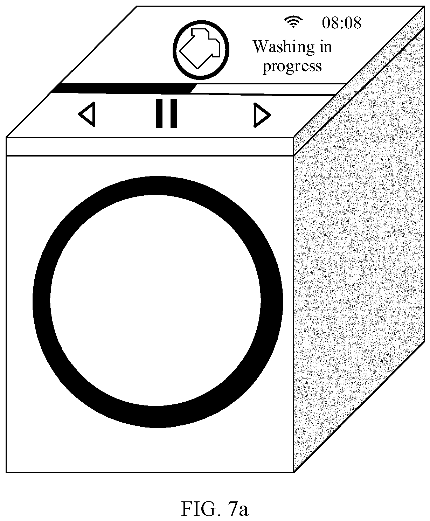

In addition, as shown in FIG. 2, the motor 005 is connected to the second controller 20. The output module 40 is connected to the first controller 10. As shown in FIG. 6 and FIG. 7, the second controller 20 is further configured to: obtain a running state of the motor 005, and feed back the running state of the motor 005 to the first controller 10. The first controller 10 is configured to feed back the running state of the motor 005 to the user by using the output module 40.

In an implementation of this application, as shown in FIG. 2, the output module 40 includes the loudspeaker 013. The first controller 10 may feed back the state information of the motor 005 to the user through voice broadcast by using the loudspeaker 013.

As shown in FIG. 6, during working, the second processor 201 may obtain the running state of the motor 005, and send the running state of the motor 005 to the first processor 101 by using the second communication interface 200 and the first communication interface 100. The first processor 101 is configured to: parse the running state of the motor 005, and produce sound on the loudspeaker 013 by using the audio processing module 012.

As shown in FIG. 6a, the intelligent electric appliance may feed back a current working state in real time through voice broadcast.

In another implementation of this application, as shown in FIG. 2, the output module 40 further includes the display screen 009. The first controller 10 may further display the running state of the motor 005 by using the display screen 009.

As shown in FIG. 7, during working, the second processor 201 may obtain the running state of the motor 005, and send the running state of the motor 005 to the first processor 101 by using the second communication interface 200 and the first communication interface 100. The first processor 101 parses the running state of the motor 005, and presents the running state of the intelligent electric appliance on the display screen 009 by using the video display module 008.

For example, the running state that is of the motor 005 and that is obtained by the second processor 201 is, for example, an analog signal, and the first processor 101 may convert, for example, the analog signal into a digital signal.

As shown in FIG. 7a, the intelligent electric appliance may display a current working state by using the display screen 009.

Therefore, the first controller 10 may receive an instruction by using the far-field voice module 010 or the touchscreen, convert the instruction, by using the first processor 101 and the intelligent processing module 002, into an instruction that can be recognized by the second controller 20, and send the instruction to the second controller 20 by using the first communication interface 100, to control the running state of the motor 005. Alternatively, the second processor 201 may obtain the running state of the motor 005, and send the running state to the first controller 10 by using the second communication interface 200 and the first communication interface 100; and after performing state parsing the first processor 101 and the intelligent processing module 002, present the running state of the intelligent electric appliance on the display screen 009 by using the video display module 008; or after processing the running state by using the audio processing module 012, play the running state by using the loudspeaker 013. Therefore, the user can more conveniently control the intelligent electric appliance, and can obtain the running state of the intelligent electric appliance in a timely manner, to improve user experience of the intelligent electric appliance.

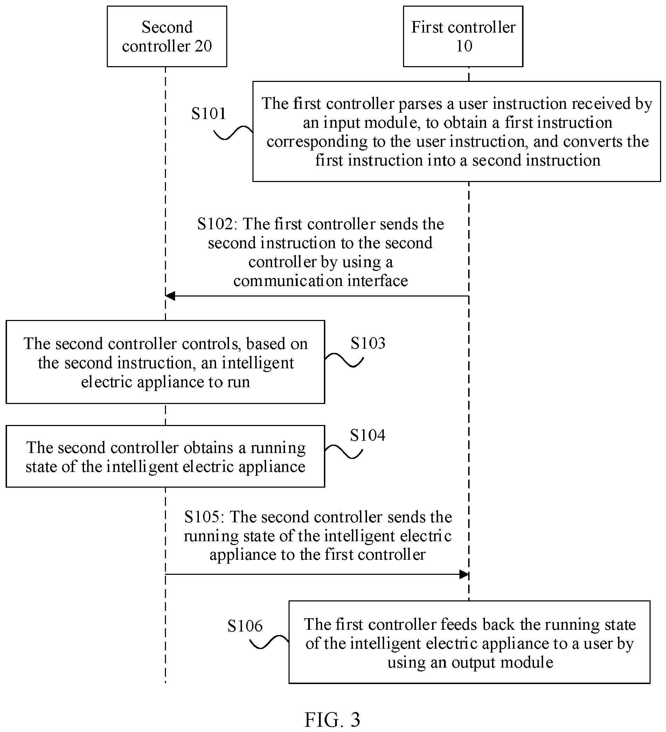

An embodiment of this application further provides a control method for an intelligent electric appliance. As shown in FIG. 3, the method includes the following steps.

S101. A first controller 10 parses a user instruction received by an input module 30, to obtain a first instruction corresponding to the user instruction, and converts the first instruction into a second instruction.

In an implementation of this application, the input module 30 includes a microphone 011, and that the first controller 10 receives a first instruction of a user includes:

The first controller 10 parses a voice instruction that is of the user and that is received by the microphone 011, to obtain the first instruction corresponding to the voice instruction. For example, the first instruction is an instruction that can be recognized by the first controller.

In another implementation of this application, the input module 30 includes a touchscreen, and the first controller is specifically configured to:
parse a touch instruction that is of a user and that is received by the touchscreen, to obtain the first instruction corresponding to the touch instruction.

For example, the intelligent electric appliance is a washer. When the user indicates "start the washer" through voice or by using the touchscreen, the first controller 10 of the washer receives the instruction, preprocesses the instruction, and parses the voice information or the touch operation to obtain the first instruction.

The first controller 10 may further convert the first instruction into the second instruction.

S102 The first controller sends the second instruction to a second controller by using a communication interface.

S103. The second controller controls, based on the second instruction, the intelligent electric appliance to run.

The second instruction is an instruction that can be recognized by the second controller 20, or the second instruction is a control instruction that can be recognized by a motor of the intelligent electric appliance.

In a possible case, the first controller may directly send the first instruction to the second controller by using the communication interface, and the second controller may control, based on the first instruction, the intelligent electric appliance to run.

In an optional case, the first controller 10 is further configured to: parse the user instruction received by the input module 30, to obtain a third instruction corresponding to the user instruction, and send the third instruction to the second controller 20 by using the communication interface; and the second controller 20 is further configured to control, based on the third instruction, the intelligent electric appliance to run.

S104. The second controller obtains a running state of the intelligent electric appliance.

For example, a sensor is mounted on the intelligent electric appliance. The sensor may be configured to detect the running state of the intelligent electric appliance. The second controller may obtain the running state of the intelligent electric appliance by using the sensor.

S105. The second controller sends the running state of the intelligent electric appliance to the first controller.

The running state of the intelligent electric appliance obtained by the second controller is, for example, digital information, and the second controller may send the digital information to the first controller.

S106. The first controller 10 feeds back the running state of the intelligent electric appliance to the user by using an output module 40.

For example, the first controller 10 may decode, by using a first processor 100, the digital information sent by the second controller 20, to obtain the running state of the intelligent electric appliance.

In an implementation of this application, the output module 40 includes a loudspeaker 013, and that the first controller 10 feeds back the running state of the intelligent electric appliance to the user includes:

The first controller 10 feeds back the running state of the intelligent electric appliance to the user through voice broadcast by using the loudspeaker 013.

For example, the first controller 10 may control an audio processing module 012 to convert the current running state of the intelligent electric appliance into audio, and perform voice broadcast by using the loudspeaker 013.

In another implementation of this application, the output module 40 further includes a display screen 009, and that the first controller feeds back the running state of the intelligent electric appliance to the user includes:

The first controller feeds back the running state of the intelligent electric appliance to the user through display by using the display screen.

For example, the first controller 10 may control a video display module 008 to convert the current running state of the intelligent electric appliance into a video, and display the video by using the display screen 009.

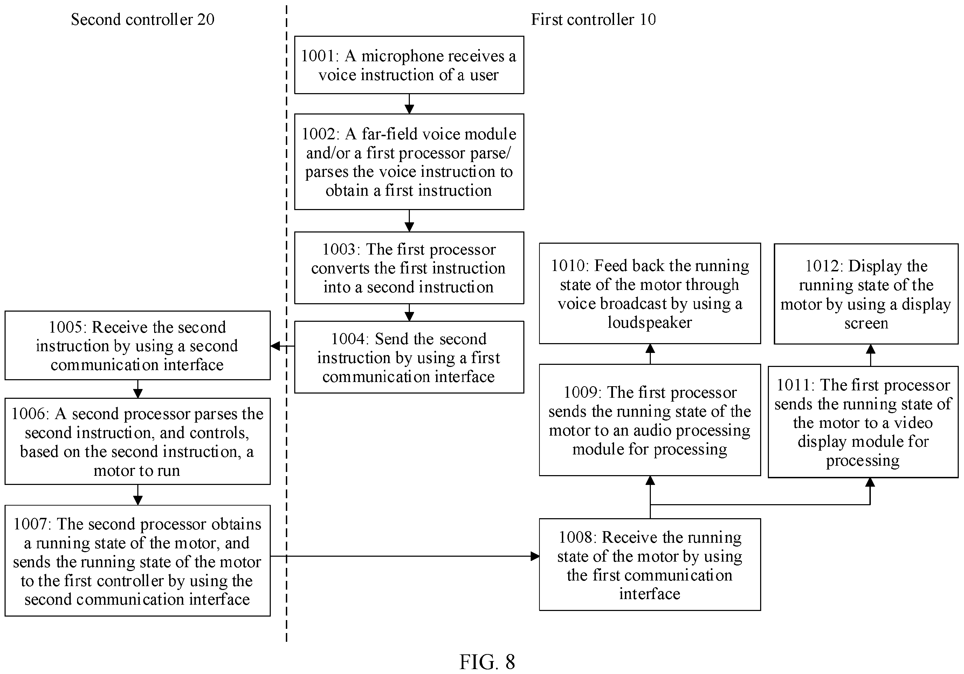

An embodiment of this application further provides another example control method. As shown in FIG. 8, the method includes the following steps.

S1001. A microphone receives a voice instruction of a user

S1002. A far-field voice module and/or a first processor of a first controller parse/parses the voice instruction to obtain a first instruction.

S1003. The first processor of the first controller converts the first instruction into a second instruction.

S1004. The first controller sends the second instruction by using a first communication interface.

51005. A second controller receives the second instruction by using a second communication interface.

S1006. A second processor of the second controller parses the second instruction, and controls, based on the second instruction, a motor to run.

S1007. The second processor of the second controller obtains a running state of the motor, and sends the running state of the motor to the first controller by using the second communication interface.

S1008. The first controller receives the running state of the motor by using the first communication interface.

S1009. The first processor of the first controller sends the running state of the motor to an audio processing module for processing.

S1010. The first controller feeds back the running state of the motor through voice broadcast by using a loudspeaker.

Optionally, after step S1008, the method further includes:
S1011. The first processor of the first controller sends the running state of the motor to a video display module for processing.
S1012. The first controller displays the running state of the motor by using a display screen.

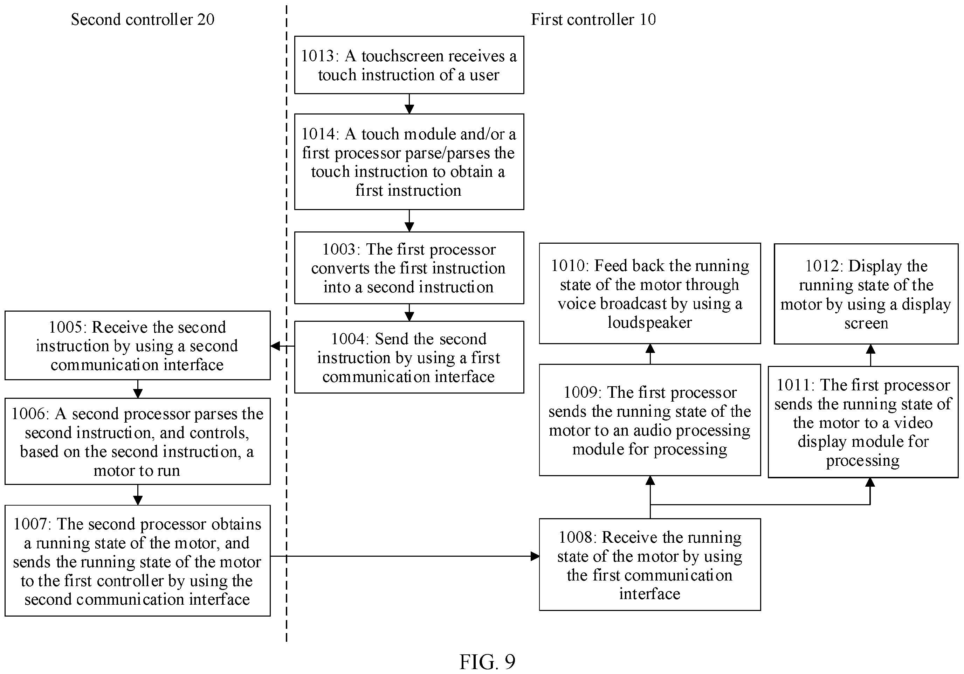

In another implementation of this application, as shown in FIG. 9, before step S1003, the control method further includes:
S1013. A touchscreen receives a touch instruction of the user.
S1014. A touch module and/or the first processor of the first controller parse/parses the touch instruction to obtain the first instruction.

The first controller is detachably connected to the second controller by using a communication interface. Therefore, intelligent control and real-time feedback on the intelligent electric appliance are implemented, and only hardware of the first controller, an input module, and an output module may be upgraded, or only software of the first controller may be upgraded.

Before the hardware of the first controller, the input module, and the output module are upgraded, the hardware of the first controller, the input module, and the output module may be first separated from the intelligent electric appliance, and then the hardware of the first controller, the input module, and the output module are upgraded.

It should be noted that upgrading the hardware of the first controller, the input module, and the output module may be replacing the hardware or adding new hardware, to improve performance of the intelligent electric appliance. In this process, a board and a component of the second controller do not need to be modified.

In an implementation of this application, the hardware of the first controller, the input module, and the output module may be disposed on one board. The board is connected to the second controller by using the communication interface. When the hardware is upgraded, the board may be first separated from the second controller, and the hardware is replaced or new hardware is added.

In another implementation of this application, the hardware of the first controller, the input module, and the output module may be separately disposed on a plurality of different boards. The plurality of boards are connected to the second controller by using the communication interface. When the hardware is upgraded, a board corresponding to hardware that needs to be upgraded may be separated from the second controller, and the hardware is replaced or new hardware is added.

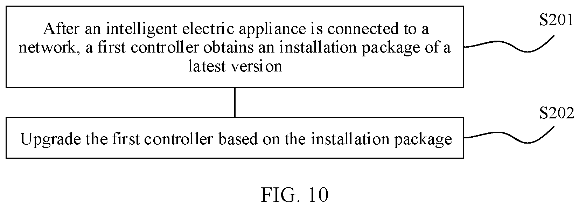

For example, as shown in FIG. 10, a software upgrade method for an intelligent electric appliance may include the following steps:
S201. After the intelligent electric appliance is connected to a network, a first controller obtains an installation package of a latest version.
S202. Upgrade the first controller based on the installation package.

In this way, the first controller is connected to a second controller by using a communication interface. Therefore, an electric appliance microcontroller is decoupled from an intelligent controller, and the first controller may be independently upgraded and evolved or replaced, so that the first controller can inherit and follow intelligent solutions in some existing fields. In addition, evolution of an intelligent technology may also be synchronously tracked. Therefore, time of putting the intelligent electric appliance on the market can be accelerated, to introduce more intelligent household appliance products to the market, and meet a living and working requirement of a user

In addition, compared with a conventional-technology manner in which an intelligent controller and a conventional electric appliance microcontroller system of an intelligent electric appliance are integrated together and upgrade packages of both the intelligent controller and the electric appliance microcontroller system need to be downloaded during upgrade, in the solution provided in this embodiment of this application, only an upgrade package of the intelligent controller needs to be downloaded during upgrade, so that traffic can be reduced, and an upgrade speed can be improved, to improve user experience of the intelligent electric appliance.

It should be noted that the first controller may be one controller, or may include a plurality of sub-controllers, each sub-controller is detachably connected to the second controller by using the communication interface, and the one or more sub-controllers are configured to be independently upgraded when the intelligent electric appliance is connected to the network.

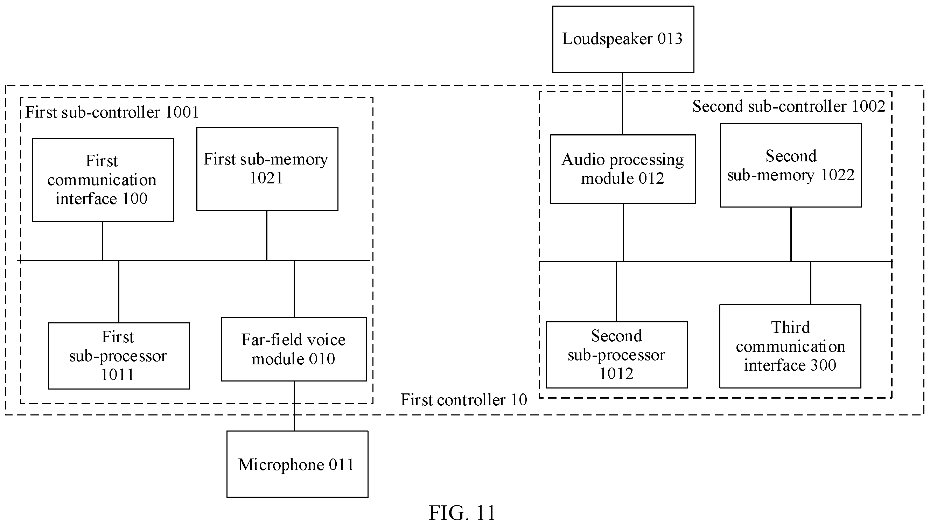

For example, as shown in FIG. 11, the first controller 10 includes a first sub-controller 1001 and a second sub-controller 1002, and the first sub-controller 1001 is connected to the second sub-controller 1002 by using, for example, a communication bus 016.

The first sub-controller includes a first communication interface 100, a first sub-memory 1021, a first sub-processor 1011, and afar-field voice module 010.

The second sub-controller 1002 includes, for example, an audio processing module 012, a second sub-memory 1021, a second sub-processor 1012, and a third communication interface 300.

The first communication interface 100 and the third communication interface 300 may be detachably connected to the second controller 20.

During working, the first sub-controller may obtain a first instruction of the user by using a microphone 011, convert the first instruction into a second instruction, and send the second instruction to the second controller. The second sub-controller 1002 may obtain a running state of the intelligent electric appliance by using the second controller, and feed back the running state of the intelligent electric appliance to the user by using a loudspeaker 013.

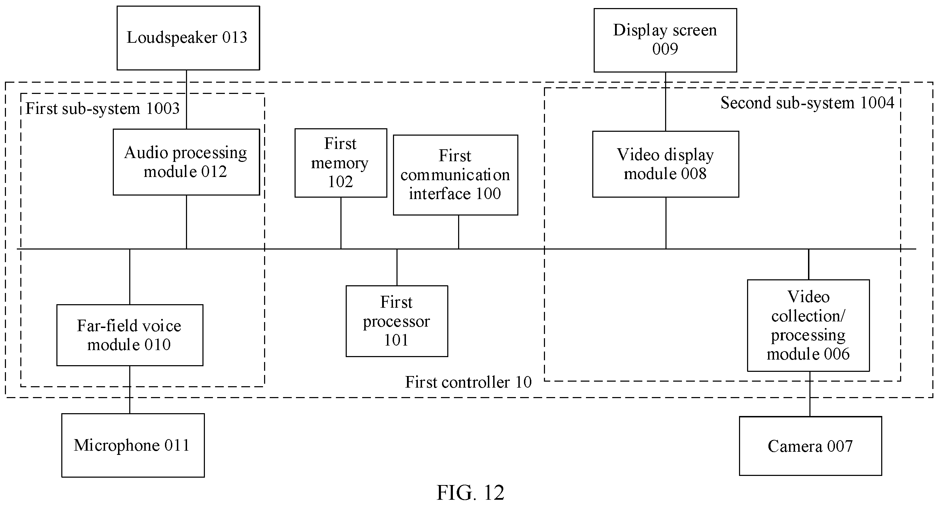

In another implementation of this application, as shown in FIG. 12, the first controller 10 may be divided into one or more sub-systems based on a function, and the one or more sub-controllers are configured to be independently upgraded when the intelligent electric appliance is connected to the network.

For example, as shown in FIG. 12, the first controller 10 includes a first sub-system 1003 and a second sub-system 1004. The first sub-system 1003 has, for example, an audio function, and may obtain a voice instruction of the user by using a microphone 011, and perform voice broadcast by using a loudspeaker 013.

The second sub-system 1004 has, for example, a video function, to display a running state, a control result, or the like of the intelligent electric appliance as a video by using a display screen 009, or obtain an image of the user by using a camera, to implement related control on the intelligent electric appliance, facial recognition, other video image processing, and the like.

The first sub-system 1003 and the second sub-system 1004 may be independently upgraded when the intelligent electric appliance is connected to the network.

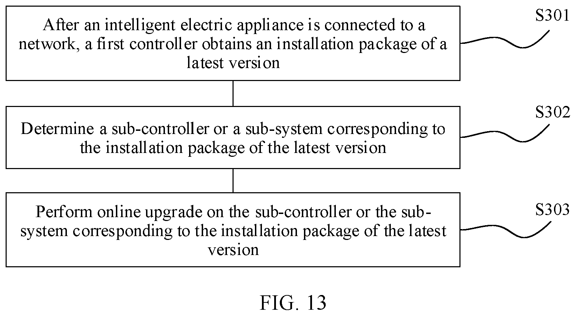

As shown in FIG. 13, a software upgrade method for a first controller 10 may include the following steps:
S301. After an intelligent electric appliance is connected to a network, the first controller obtains an installation package of a latest version.
S302. Determine a sub-controller or a sub-system corresponding to the installation package of the latest version.
S303. Perform online upgrade on the sub-controller or the sub-system corresponding to the installation package of the latest version.

In this way, during upgrade, only an upgrade package of the sub-controller or the sub-system needs to be downloaded, and only the corresponding sub-controller or sub-system is upgraded. Therefore, traffic can be further reduced, and an upgrade speed can be further improved, to improve user experience of the intelligent electric appliance.

In the upgrade method provided in this embodiment of this application, remote upgrade can be further implemented, so that a user does not need to wait for a post-sales person to perform manual upgrade. This can improve user experience, and can also reduce post-sales costs.

The foregoing description is merely a specific implementation of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. An intelligent electric appliance, comprising:
a first controller, configured to: parse a user instruction received by an input module, to obtain a first instruction corresponding to the user instruction, and convert the first instruction into a second instruction, wherein the second instruction is an instruction that can be recognized by a second controller, the first controller is configured to control an intelligent control part of the intelligent electric appliance, the intelligent control part comprises control on at least one of an audio function, a video function, or a communication function, the second controller is configured to implement conventional control on the intelligent electric appliance, the conventional control comprises control on a motor, and the second controller is detachably connected to the first controller by using a communication interface, wherein
the first controller is further configured to send the second instruction to the second controller by using the communication interface; and
the second controller is configured to control, based on the second instruction, the intelligent electric appliance to run.

2. The intelligent electric appliance according to claim 1, wherein the first controller is further configured to: parse the user instruction received by the input module, to obtain a third instruction corresponding to the user instruction, and send the third instruction to the second controller by using the communication interface; and
the second controller is further configured to control, based on the third instruction, the intelligent electric appliance to run.

3. The intelligent electric appliance according to claim 1 or 2, further comprising the input module, wherein the input module is connected to the first controller, and the input module is configured to receive the user instruction.

4. The intelligent electric appliance according to any one of claims 1 to 3, wherein the input module comprises a microphone, the user instruction is a voice instruction of a user, and the first controller is specifically configured to:
parse the voice instruction that is of the user and that is received by the microphone, to obtain the first instruction corresponding to the voice instruction.

5. The intelligent electric appliance according to any one of claims 1 to 3, wherein the input module comprises a touchscreen, the user instruction is a touch instruction of a user, and the first controller is specifically configured to:
parse the touch instruction that is of the user and that is received by the touchscreen, to obtain the first instruction.

6. The intelligent electric appliance according to any one of claims 1 to 5, further comprising the motor and an output module, wherein the output module is connected to the first controller, and the motor is connected to the second controller;
the second controller is further configured to: obtain a running state of the motor, and send the running state of the motor to the first controller; and
the first controller is configured to feed back the running state of the motor to the user by using the output module; or
the first controller is configured to adjust control on the intelligent control part based on the running state of the motor.

7. The intelligent electric appliance according to claim 6, wherein the output module comprises a loudspeaker, and that the first controller is configured to feed back the running state of the motor to the user by using the output module is specifically:
the first controller is configured to feed back the running state of the motor to the user through voice broadcast by using the loudspeaker.

8. The intelligent electric appliance according to claim 6 or 7, wherein the output module comprises a display screen, and that the first controller is configured to feed back the running state of the motor to the user by using the output module is specifically:
the first controller feeds back the running state of the motor to the user by using the display screen.

9. The intelligent electric appliance according to any one of claims 1 to 8, wherein the first controller comprises one or more sub-controllers connected to the input module, and the one or more sub-controllers are separately detachably connected to the second controller by using the communication interface.

10. The intelligent electric appliance according to any one of claims 1 to 9, wherein the communication interface comprises a serial peripheral interface SPI, an inter integrated circuit bus I2C, or a universal asynchronous receiver/transmitter UART.

11. A control method for an intelligent electric appliance, wherein the method comprises:
parsing, by a first controller, a user instruction received by an input module, to obtain a first instruction corresponding to the user instruction, and converting the first instruction into a second instruction, wherein the second instruction is an instruction that can be recognized by a second controller, the first controller is configured to control an intelligent control part of the intelligent electric appliance, the intelligent control part comprises control on at least one of an audio function, a video function, or a communication function, the second controller is configured to implement conventional control on the intelligent electric appliance, the conventional control comprises control on a motor, and the first controller is detachably connected to the second controller by using a communication interface;
sending, by the first controller, the second instruction to the second controller by using the communication interface; and
controlling, by the second controller based on the second instruction, the intelligent electric appliance to run.

12. The method according to claim 11, wherein the method further comprises: parsing, by the first controller, the user instruction received by the input module, to obtain a third instruction corresponding to the user instruction;
sending, by the first controller, the third instruction to the second controller by using the communication interface; and
controlling, by the second controller based on the third instruction, the intelligent electric appliance to run.

13. The method according to claim 12, wherein before the parsing, by a first controller, a user instruction received by an input module, the method further comprises:
receiving, by the first controller, the user instruction by using the input module, wherein the input module is connected to the first controller.

14. The method according to any one of claims 11 to 13, wherein the input module comprises a microphone, and the parsing, by a first controller, a user instruction received by an input module comprises:
parsing, by the first controller, a voice instruction that is of a user and that is received by the microphone, to obtain the first instruction corresponding to the voice instruction.

15. The method according to any one of claims 11 to 13, wherein the input module comprises a touchscreen, and the parsing, by a first controller, a user instruction received by an input module comprises:
parsing, by the first controller, a touch instruction that is of a user and that is received by the touchscreen, to obtain the first instruction.

16. The method according to any one of claims 11 to 15, wherein the method further comprises:
obtaining, by the second controller, a running state of the motor, and sending the running state of the motor to the first controller, wherein the motor is connected to the second controller; and
feeding back, by the first controller, the running state of the motor to the user by using an output module, wherein the output module is connected to the first controller; or
adjusting, by the first controller, control on the intelligent control part based on the running state of the motor.

17. The method according to claim 16, wherein the output module comprises a loudspeaker, and the feeding back, by the first controller, the running state of the motor to the user by using an output module comprises:
feeding back, by the first controller, the running state of the motor to the user through voice broadcast by using the loudspeaker.

18. The method according to claim 16 or 17, wherein the output module comprises a display screen, and the feeding back, by the first controller, the running state of the motor to the user by using an output module comprises:
feeding back, by the first controller, the running state of the motor to the user by using the display screen.

19. The method according to any one of claims 11 to 18, wherein the first controller comprises one or more sub-controllers connected to the input module, and the one or more sub-controllers are separately detachably connected to the second controller by using the communication interface.

20. The method according to any one of claims 11 to 19, wherein the communication interface comprises an SPI, an I2C, or a UART.

21. A computer-readable storage medium, wherein the storage medium stores a computer program, and when the computer program is executed by a computer or a processor, the computer or the processor is enabled to perform the method according to any one of claims 11 to 20.

22. A computer program product, wherein the computer program product comprises computer program code, and when the computer program code is run on a computer or a processor, the computer or the processor is enabled to implement the method according to any one of claims 11 to 20.
